# EUROPEAN PATENT SPECIFICATION

(11) **EP 3 772 972 B1**
(45) Date of publication and mention of the grant of the patent: **28.10.2026**
(21) Application number: 19714701.0
(22) Date of filing: 08.04.2019
(51) Int. Cl.: A23D 7/005, A23L 13/40, A23C 19/093, A23K 20/158

(54) **A FATTY PREPARATION, A PROCESS FOR MAKING SAID FATTY PREPARATION, AND A PRODUCT CONTAINING THE SAME**
FETTZUBEREITUNG, VERFAHREN ZUR HERSTELLUNG VON BESAGTER FETTZUBEREITUNG UND PRODUKT DAMIT
PRÉPARATION GRASSE, PROCÉDÉ DE FABRICATION DE LADITE PRÉPARATION GRASSE ET PRODUIT LA CONTENANT

(30) Priority: 09.04.2018 EP 18382244
(43) Date of publication of application: 17.02.2021
(73) Proprietor: Borges Agricultural & Industrial Edible Oils S.A.U., 25300 Tarrega (ES)
(72) Inventor: BENEDÍ SANTAMARIA, Carolina Cristina, 25300 TARREGA (ES); MARTÍN MARTÍN, Maria de la O, 28220 MAJADAHONDA (ES); GARCÍA BERROCAL, José Vicente, 28250 TORRELODONES (ES); ESTELLES BLAY, Pedro Antonio, 28018 MADRID (ES)
(74) Representative: Herrero & Asociados, S.L.
(86) International application number: PCT/EP2019/058837
(87) International publication number: WO 2019/197350

(56) References cited:
- EP-A1- 3 141 130
- FR-A1- 2 622 772
- US-A1- 2013 171 317
- DATABASE GNPD [online] MINTEL; 3 June 2016 (2016-06-03), ANONYMOUS: "Paté with Prosciutto", XP093124010, retrieved from https://www.gnpd.com/sinatra/recordpage/4045885/ Database accession no. 4045885
- DATABASE GNPD [online] MINTEL; 25 November 2016 (2016-11-25), ANONYMOUS: "Plant-Based Almond Preparation with Herbs", XP093124013, retrieved from https://www.gnpd.com/sinatra/recordpage/4444515/ Database accession no. 4444515
- DATABASE GNPD [online] MINTEL; 1 November 2017 (2017-11-01), ANONYMOUS: "Vegan Sausages", XP093124015, retrieved from https://www.gnpd.com/sinatra/recordpage/5211927/ Database accession no. 5211927

## Description

### FIELD OF THE INVENTION

The present invention relates to the field of foodstuff. In particular, the present invention relates to a fatty preparation which does not comprise fats with a plant origin saturated fat content higher than 25% by weight nor fats with an animal origin saturated fat content higher than 15% by weight nor trans fats, which are harmful for health, a process for making such fatty preparation and a use of the same as defined in the appended claims.

### BACKGROUND

The discussion about the use of palm oil in the processed food industry has marked the entire sector in recent months. However, while the social and media pressure grows against a foodstuff whose nutritional properties and its productive process are questioned, the sector is betting more than ever on this ingredient.

The first data of 2017 show that the trend continues to rise. According to the trade register, palm oil has been imported by a value of 216 million between January and February, almost twice as much as in the same months of the previous year.

However, the sector intends to calm the discussion about this product. Sources of the Spanish processed food industry assure that the properties of this ingredient "allow to enjoy a wide range of safe products for human consumption". In particular, it is highlighted that it allows to extend the useful life of food.

There are many voices which have criticized the use of this food. On the one hand, NGOs and environmental organizations have criticized the environmental impact of their production. But the criticism of palm oil is made, above all, from the point of view of health. In 2016, the European Food Safety Agency (EFSA) conducted an assessment of three potential food contaminants: glycidyl fatty acid esters (GE), 3-monochloropropanediol (3-MCPD), and 2-monochloropropanediol (2-MCPD). These substances are present in many different oils and fats, although, the highest levels of GE, 3-MCPD, and 2-MCPD are found in palm oil and palm fats. They are formed during food processing, particularly when refining oils at high temperatures (about 200°C).

For consumers aged three and above, margarines and 'pastries and cakes' were the main sources of exposure to all substances.

The present inventors have particularly focused on the meat sector. The meat sector occupies the fourth industrial sector in Spain. Within the food industry occupies the first place, representing more than 21.6% of the entire sector. Within the Spanish meat sector, the most widespread consumption is that of the pig, this being the only one that presents increases in consumption, compared to cattle, sheep or goats that tend to decrease.

US 2013/171317 A1 discloses a process for making a meat-fat substitute, comprising:
- weighing dry ingredients amongst of which 0.5-20 wt% gums such as carob (or locust bean) and carrageenan,
- adding them to water,
- adding 0.5-10 wt% of a vegetable oil, such as soybean, grapeseed, olive, canola or sunflower oil,
- heating the mixture at 95°C.

In order to improve meat products, the meat industry has developed several open innovation lines aimed at:
1. Reduction of fat (like pig fat) in cooked and cured products: For this, they are working with solutions that allow the total or partial replacement of animal fats with ingredients that provide added value: improved proteins or vegetable oils, enriched in omega 3 and 6, antioxidants, vegetable fiber...
2. Reduction of salt content: Despite its importance in the technological processes of curing and conservation, it is proceeding to reduce or replace its presence with other ingredients with its same technological function.
3. Reduction of nitrites and nitrates in the formulations
4. Less aggressive preservation techniques such as pulsed light or UV light.

This problem has led to the present inventors to develop alternative products to animal fats in order to manufacture other more complex food products that will get to the final consumer, therefore, meat, cheese or even food for animals. Animal fats also have a high content of saturated acids, reaching the same content as palm fat and this is why they are also to be avoided. If tropical fat can be replaced, it may also be possible to replace meat fat. Likewise, other fatty acids which can also be harmful to health are also intended to be removed from compositions for human or animal food.

Accordingly, the present inventors provide a new fatty preparation, a process for making thereof and products containing thereof that solve the above mentioned problems. In particular, they have achieved the following goals:
- Reduction of animal fat content
- Decrease of saturated fats with respect to bacon and/or lard
- Decrease in the energy value with respect to animal fats
- Rich in oleic and linoleic fatty acids.
- Staining is allowed. The addition of vitamins and minerals is also allowed.
- Possibility of removing water from the original recipes
- Without cholesterol contribution
- Greater technological fluidity of the mass in the machinery. Less loss of material during processing.
- Reduction of the curing time of meat products (sausages)
- Increase the juiciness of processed fresh meat products (hamburgers)

### SUMMARY OF THE INVENTION

In a first aspect, the present invention relates to a process for making a fatty preparation to be incorporated in a meat or cheese product or in a product for feeding animals, wherein said fatty preparation does not comprise fats with a plant origin saturated fat content higher than 25% by weight nor fats with an animal origin saturated fat content higher than 15% by weight nor trans fats, as defined in appended claim 1 and its dependent claims.

In a second aspect, the present invention relates to a solid fatty preparation as defined in appended claim 9 and its dependent claims.

In a third aspect, the present invention relates to the use of the solid fatty preparation of the second aspect, as a substitute component for fat or animal-derived ingredients to be incorporated in a meat or cheese product or product for feeding animals.

### DETAILED DESCRIPTION OF THE INVENTION

In a first aspect, the present invention relates to a process for making a solid fatty preparation to be incorporated in a meat or cheese product or in a product for feeding animals as a substitute component for fat or animal-derived ingredients, wherein said fatty preparation does not comprise fats with a plant origin-saturated fat content higher than 25% by weight, nor fats with an animal origin-saturated fat content higher than 15% by weight nor trans fats, nor totally or partially hydrogenated oils or fats, nor interesterified fats, comprising the steps of:
a) weighing and mixing solid or dilution ingredients comprising:
   - carob in an amount between 1 and 12% by weight with respect to the total preparation, and
   - agar-agar or both of carrageenan and agar-agar in an amount between 1 and 12% by weight with respect to the total preparation;
b) heating water in an amount between 1 and 50% by weight with respect to the total preparation to at least 60°C in a cutter-type mixer, preferably to at least 85°C;
c) adding the ingredients of step a) into the heated cutter-type mixer of step b) until obtaining an homogeneous solution;
d) adding an oil in an amount between 1 and 50% by weight with respect to the total preparation selected from the group consisting of high oleic sunflower oil, olive oil, extra virgin olive oil, sunflower seed oil, rapeseed oil, grapeseed oil, or any other vegetable oil which is liquid at room temperature containing less than 25% wt of saturated fats, until obtaining an emulsion without observing oil,
providing that the amount of the components added in steps a) to d) does not exceed 100%.

In a further embodiment, said process further comprises the step of:
e) packing the emulsion obtained in step d). This packing step can be carried out under vacuum or without vacuum, with heat-sealable sheet or induction, in bags or boxes, in cube, in shrink, extruded,...

In another further embodiment, said process further comprises the step of:
f) introducing said packed emulsion in a refrigerator or storing it at room temperature.

In the context of the present invention the term "a plant origin saturated fat" is understood as plant origin fatty acids which do not have double bonds in their chain. Examples thereof include, but are not limited to, palm or coconut oil.

Likewise, the term "an animal origin saturated fat" as animal origin fatty acids which do not have double bonds in their chain. Examples thereof include, but are not limited to, lard, marbling, bacon. The term "trans fats" is understood as unsaturated fats that are formed in the industrial processing of some foods known as hydrogenation, during which their configuration is changed. Examples thereof include, but not limited thereto, partially hydrogenated fats.

The term "meat product" is understood as processed products resulting from the processing of the meat or from the new processing of said processed products, so that the cutting surface shows that the product no longer possesses the characteristics of fresh meat. Preferably, said meat product is processed meat, cured cold meat, fresh cold meat cooked cold meat, pâté, "sobrassada".

The term "cheese product" is understood as substitutes for cheese that do not contain milk, lactose, caseinates or fats of milk origin. Preferably, said cheese product is block cheese.

The term "product for feeding animals" is understood as a food intended for consumption preferably for pets (dogs and cats). The process of using fat is similar to that of human consumption and therefore it can be applied as the case of meat for human consumption.

In a preferred embodiment, the ingredients in step a) further comprises at least one of: cellulose, pectin, xanthan, guar gum, gum Arabic, meal, starch, salt, soy lecithin, sunflower lecithin, antioxidant, beta-carotene, colorant, preservative and aroma. A person of ordinary skill in the art can choose one or another or a combinations thereof depending on the final purpose. The present invention specifically encompass the individual addition of said ingredients or of any group (at least two ingredients) of said other ingredients in the fatty preparation.

The step c) and the step d) are carried out independently each other, preferably, at a speed between 40 and 25.000 rpm. In another preferred embodiment, an anhydrous citric acid aqueous solution or solid citric acid or lactic acid or acetic acid or a mixture thereof is added in step c). This is particularly useful in products not thermally treated: cured, fresh cold meat ...

In a yet further preferred embodiment of the process, the fatty preparation is incorporated in a meat or cheese product selected from processed meat, cured cold meat, fresh cold meat, cooked cold meat, pâté, "sobrassada" and block cheese.

In a second aspect, the present invention relates to a solid fatty preparation comprising or consisting of the following components:
a) an oil in an amount between 30 and 50% by weight with respect to the total preparation, selected from the group consisting of high oleic sunflower oil, olive oil, extra virgin olive oil, sunflower seed oil, rapeseed oil, grapeseed oil or any other vegetable oil which is liquid at room temperature containing less than 25% wt of saturated fats;
b) water in an amount between 1 and 50% by weight with respect to the total preparation;
c) carob in an amount between 1 and 12% by weight with respect to the total preparation; and
d) agar-agar in an amount between 1 and 12% by weight with respect to the total preparation;

wherein said fatty preparation does not comprise fats with a plant origin saturated fat content higher than 25% by weight nor fats with an animal origin saturated fat content higher than 15% by weight nor trans fats nor totally or partially hydrogenated oils or fats; nor interesterified fats;
providing that the amount of all the components in the final preparation does not exceed 100%.

In a further embodiment, said fatty preparation further comprises at least one of: citric acid or lactic acid or acetic acid or a mixture thereof, cellulose, pectin, xanthan, guar gum, gum Arabic, meal, starch, salt, soy lecithin, sunflower lecithin, antioxidant, beta-carotene, colorant, preservative and aroma. A person of ordinary skill in the art can choose one or another or a combinations thereof depending on the final purpose. The present invention specifically encompass the individual addition of said ingredients or of any group (at least two ingredients) of said other ingredients in the fatty preparation.

In another preferred embodiment, the following components are independently present in the final composition in the following ranges (% w/w):
a) citric acid or lactic acid or acetic acid or a mixture thereof in a range between 1 and 50%;
b) cellulose in a range between 1 and 40%;
c) pectin in a range between 1 and 4%; and
d) xanthan in a range between 1 and 3%, provided that the sum of the all the components in the final composition is equal or lower than 100%.

In a third aspect, the present invention relates to the use of the solid fatty preparation according to any of the previous embodiments, as a substitute component for fat or animal-derived ingredients to be incorporated in a meat or cheese product or product for feeding animals.

In a preferred embodiment, said meat or cheese product or product for feeding animals is selected from processed meat, cured cold meat, fresh cold meat, cooked cold meat, pâté, "sobrassada" and block cheese.

The invention will now be further described by way of the following non-limiting examples.

### EXAMPLES

### Example 1 (illustration purposes only)

In order to make chorizo, the following fat formula is used:

### Ingredients (by weight):

45% Oil
25% Water
10% carrageenan
10% Carob Gum
10% Cellulose

### Process:

a) In a specific mixer with cutter-type blades, hot water is added above 60°C.
b) The solid elements (carrageenan, carob gum and cellulose) are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Cured Chorizo:

The cured chorizos are elaborated following a traditional recipe, replacing the complete the percentage of animal fat with the fat formulation of the invention. The meat product as obtained has similar characteristics to those of the original product made with animal fat.

### Example 2 (illustration purposes only)

In order to make a hamburger, the following fat formula is used:

### Ingredients (by weight):

### Liquids:

40% Oil
20% Water

### Solids:

8% carrageenan
8% Carob Gum
5% Pectin
3% Xanthan
10% soy lecithin
6% guar gum

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Hamburger:

The hamburgers are elaborated following a traditional recipe, replacing the complete the percentage of animal fat with the fat formulation of the invention. The meat product as obtained has similar characteristics to those of the original product made with animal fat.

### Example 3 (illustration purposes only)

In order to make a paté, the following fat formula is used:

### Ingredients (by weight):

### Liquids:

30% Oil
40% Water

### Solids:

10% carrageenan
7% Carob Gum
3% Pectin
10% cellulose

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### Paté:

The paté is elaborated following a traditional recipe, replacing the complete the percentage of animal fat with the fat formulation of the invention. The meat product as obtained has similar characteristics to those of the original product made with animal fat.

### Example 4 (illustration purposes only)

In order to make "sobrassada", the following fat formula is used:

### Ingredients (by weight):

### Liquids:

35% Oil
30% Water

### Solids:

10% carrageenan
5% Carob Gum
15% agar-agar
3% Pectin
2% xanthan

### Process:

a) In a specific mixer with cutter-type blades, hot water is added above 60°C.
b) The solid elements are then added.
c) The ingredients are mixed at a suitable speed until observing a thick solution.
d) Oil is slowly but uninterruptedly added; initially at a slow speed which is gradually increased to maximum power, keeping it then constant for the time of the emulsion until it is solidified.
e) Once the Fat formulation is made, it is stored in a cold chamber (4°C) without covering for 4 hours. After this time, it is covered.
f) The fat can be used at least 24 hours after its manufacture.

### "Sobrassada":

The "sobrassada" is elaborated following a traditional recipe, replacing the complete the percentage of animal fat with the fat formulation of the invention. The meat product as obtained has similar characteristics to those of the original product made with animal fat.

## Claims

1. Process for making a solid fatty preparation to be incorporated in a meat or cheese product or in a product for feeding animals as a substitute component for fat or animal-derived ingredients, wherein said fatty preparation does not comprise fats with a plant origin-saturated fat content higher than 25% by weight, nor fats with an animal origin-saturated fat content higher than 15% by weight nor trans fats, nor totally or partially hydrogenated oils or fats, nor interesterified fats, comprising the steps of:
a) weighing and mixing solid or dilution ingredients comprising:
- carob in an amount between 1 and 12% by weight with respect to the total preparation, and
- agar-agar or both of carrageenan and agar-agar in an amount between 1 and 12% by weight with respect to the total preparation;
b) heating water in an amount between 1 and 50% by weight with respect to the total preparation to at least 60°C in a cutter-type mixer, preferably to at least 85°C;
c) adding the ingredients of step a) into the heated cutter-type mixer of step b) until obtaining an homogeneous solution;
d) adding an oil in an amount between 1 and 50% by weight with respect to the total preparation selected from the group consisting of high oleic sunflower oil, olive oil, extra virgin olive oil, sunflower seed oil, rapeseed oil, grapeseed oil, or any other vegetable oil which is liquid at room temperature containing less than 25% wt of saturated fats, until obtaining an emulsion without observing oil,
providing that the amount of the components added in steps a) to d) does not exceed 100%.

2. Process according to claim 1, further comprising the step of:
e) packing the emulsion obtained in step d), and optionally
f) introducing said packed emulsion in a refrigerator or storing it at room temperature.

3. Process according to claim 1 or 2, wherein the ingredients in step a) further comprises at least one of: cellulose, pectin, xanthan, guar gum, gum Arabic, meal, starch, salt, carrageenan, soy lecithin, sunflower lecithin, antioxidant, beta-carotene, colorant, preservative and aroma.

4. Process, according to any of claims 1 to 3, wherein the solid or dilution ingredients are in an amount between 1 and 5% by weight with respect to the total preparation, preferably between 1 and 2% by weight with respect to the total preparation.

5. Process according to any of the preceding claims, wherein the water is in an amount between 40 and 50% by weight with respect to the total preparation, preferably between 45 and 50% by weight with respect to the total preparation.

6. Process, according to any of the preceding claims, wherein independently each other the step c) and the step d) are carried out at a speed between 40 and 25.000 rpm.

7. Process, according to any of the preceding claims, wherein an anhydrous citric acid aqueous solution or solid citric acid or lactic acid or acetic acid or a mixture thereof is added in step c).

8. Process, according to any of the preceding claims, wherein the oil added in step d) is in an amount between 30 and 50% by weight with respect to the total preparation, preferably between 40 and 50% by weight with respect to the total preparation.

9. Solid fatty preparation comprising or consisting of the following components:
a) an oil in an amount between 30 and 50% by weight with respect to the total preparation, selected from the group consisting of high oleic sunflower oil, olive oil, extra virgin olive oil, sunflower seed oil, rapeseed oil, grapeseed oil or any other vegetable oil which is liquid at room temperature containing less than 25% wt of saturated fats;
b) water in an amount between 1 and 50% by weight with respect to the total preparation;
c) carob in an amount between 1 and 12% by weight with respect to the total preparation; and
d) agar-agar in an amount between 1 and 12% by weight with respect to the total preparation;
wherein said fatty preparation does not comprise fats with a plant origin saturated fat content higher than 25% by weight nor fats with an animal origin saturated fat content higher than 15% by weight nor trans fats nor totally or partially hydrogenated oils or fats; nor interesterified fats;
providing that the amount of all the components in the final preparation does not exceed 100%.

10. Solid fatty preparation according to claim 9, further comprising at least one of: citric acid or lactic acid or acetic acid or a mixture thereof, cellulose, pectin, xanthan, guar gum, gum Arabic, meal, starch, salt, carrageenan, soy lecithin, sunflower lecithin, antioxidant, beta-carotene, colorant, preservative and aroma.

11. Solid fatty preparation according to claim 9 or 10, wherein the following components are independently present in the final composition in the following ranges (% w/w):
b) water in an amount between 40 and 50% by weight with respect to the total preparation
c) carob in an amount between 1 and 5% by weight with respect to the total preparation;
d) agar-agar in an amount between 1 and 5% by weight with respect to the total preparation;
providing that the amount of all the components in the final preparation does not exceed 100%.

12. Solid fatty preparation according to claim 11, wherein the following components are independently present in the final composition in the following ranges (% w/w):
a) an oil selected from the group consisting of high oleic sunflower oil, olive oil, extra virgin olive oil, sunflower seed oil, rapeseed oil, grapeseed oil or any other vegetable oil which is liquid at room temperature containing less than 25% wt of saturated fats in an amount between 40 and 50% by weight with respect to the total preparation
b) water in an amount between 45 and 50% by weight with respect to the total preparation
c) carob in an amount between 1 and 2% by weight with respect to the total preparation;
d) agar-agar in an amount between 1 and 2% by weight with respect to the total preparation;
providing that the amount of all the components in the final preparation does not exceed 100%.

13. Solid fatty preparation according to any of claims 9 to 12, wherein the following components are independently present in the final composition in the following ranges (% w/w):
a) citric acid or lactic acid or acetic acid or a mixture thereof in a range between 1 and 50%, preferably between 1 and 25% and more preferably between 1 -12%;
b) cellulose in a range between 1 and 40%; preferably between 1 and 20% and more preferably between 1 -10%;
c) pectin in a range between 0.1 and 4%; preferably between 0.1 and 2% and more preferably between 0.1 -1 %;
d) xanthan in a range between 0,1 and 3%, preferably between 0.1 and 2% and more preferably between 0.1 -1.6%;
providing that the amount of all the components in the final preparation does not exceed 100%.

14. Use of the solid fatty preparation according to any of claims 9 to 13, as a substitute component for fat or animal-derived ingredients to be incorporated in a meat or cheese product or in a product for feeding animals.

## Patentansprüche

1. Verfahren zur Herstellung einer festen fetthaltigen Zubereitung, um in ein Fleisch- oder Käseprodukt oder in ein Produkt zur Fütterung von Tieren als eine Ersatzkomponente für Fett oder Inhaltsstoffe tierischen Ursprungs eingearbeitet zu werden, wobei die fetthaltige Zubereitung weder Fette mit einem Gehalt an gesättigten Fettsäuren pflanzlichen Ursprungs größer als 25 Gewichts-%, noch mit einem Gehalt an gesättigten Fettsäuren tierischen Ursprungs größer als 15 Gewichts-%, noch Transfette, noch vollständig oder teilweise hydrierte Öle oder Fette, noch umgeesterte Fette umfasst, dass die folgenden Schritte umfasst:
a) Abwiegen und Mischen von festen oder verdünnten Inhaltsstoffen, umfassend:
- Johannisbrot in einer Menge zwischen 1 und 12 Gewichts-%, bezogen auf die gesamte Zubereitung, und
- Agar-Agar oder sowohl Carrageen als auch Agar-Agar in einer Menge zwischen 1 und 12 Gewichts-%, bezogen auf die gesamte Zubereitung;
b) Erhitzen von Wasser in einer Menge zwischen 1 und 50 Gewichts-%, bezogen auf die gesamte Zubereitung, auf mindestens 60 °C in einem Mischer des Schneid-Typs, bevorzugt auf mindestens 85 °C;
c) Zugabe der Inhaltsstoffe aus Schritt a) in den erhitzten Mischer des Schneid-Typs aus Schritt b), bis Erhalten einer homogenen Lösung;
d) Zugabe eines Öls in einer Menge zwischen 1 und 50 Gewichts-%, bezogen auf die gesamte Zubereitung, ausgewählt aus der Gruppe bestehend aus ölsäurereichem Sonnenblumenöl, Olivenöl, Natives Olivenöl Extra, Sonnenblumenkernöl, Rapsöl, Traubenkernöl oder jedes andere Pflanzenöl, welches bei Raumtemperatur flüssig ist, das weniger als 25 Gewichts-% gesättigte Fette enthält, bis Erhalten einer Emulsion, ohne dass Öl observierbar ist,
vorausgesetzt, dass die Menge der in den Schritten a) bis d) zugegebenen Komponenten 100 % nicht überschreitet.

2. Verfahren nach Anspruch 1, das ferner die Schritte umfasst:
e) Verpacken der in Schritt d) erhaltenen Emulsion und optional
f) Einführen der verpackten Emulsion in einen Kühlschrank oder das Lagern bei Raumtemperatur.

3. Verfahren nach Anspruch 1 oder 2, wobei die Inhaltsstoffe in Schritt a) ferner mindestens eines umfassen aus: Zellulose, Pektin, Xanthan, Guarkernmehl, Gummi Arabicum, Schrot, Stärke, Salz, Carrageen, Sojalecithin, Sonnenblumenlecithin, Antioxidationsmittel, beta-Carotin, Farbstoff, Konservierungsmittel und Aromastoff.

4. Verfahren nach einem der Ansprüche 1 bis 3, wobei die festen oder verdünnten Inhaltsstoffe in einer Menge zwischen 1 und 5 Gewichts-%, bezogen auf die gesamte Zubereitung, bevorzugt zwischen 1 und 2 Gewichts-%, bezogen auf die gesamte Zubereitung, sind.

5. Verfahren nach einem der vorhergehenden Ansprüche, wobei das Wasser in einer Menge zwischen 40 und 50 Gewichts-%, bezogen auf die gesamte Zubereitung, bevorzugt zwischen 45 und 50 Gewichts-%, bezogen auf die gesamte Zubereitung, ist.

6. Verfahren nach einem der vorhergehenden Ansprüche, wobei der Schritt c) und der Schritt d) unabhängig voneinander mit einer Geschwindigkeit zwischen 40 und 25.000 U/min durchgeführt werden.

7. Verfahren nach einem der vorhergehenden Ansprüche, wobei in Schritt c) eine wässrige Lösung von wasserfreier Zitronensäure oder feste Zitronensäure oder Milchsäure oder Essigsäure oder eine Mischung davon hinzugefügt wird.

8. Verfahren nach einem der vorhergehenden Ansprüche, wobei das in Schritt d) zugegebene Öl in einer Menge zwischen 30 und 50 Gewichts-%, bezogen auf die gesamte Zubereitung, bevorzugt zwischen 40 und 50 Gewichts-%, bezogen auf die gesamte Zubereitung, ist.

9. Feste fetthaltige Zubereitung, die die folgenden Komponenten umfasst oder besteht:
a) ein Öl in einer Menge zwischen 30 und 50 Gewichts-%, bezogen auf die gesamte Zubereitung, ausgewählt aus der Gruppe bestehend aus ölsäurereichem Sonnenblumenöl, Olivenöl, Natives Olivenöl Extra, Sonnenblumenkernöl, Rapsöl, Traubenkernöl oder jedem anderen pflanzlichen Öl, welches bei Raumtemperatur flüssig ist, das weniger als 25 Gewichts-% gesättigte Fette enthält;
b) Wasser in einer Menge zwischen 1 und 50 Gewichts-%, bezogen auf die gesamte Zubereitung;
c) Johannisbrot in einer Menge zwischen 1 und 12 Gewichts-%, bezogen auf die gesamte Zubereitung, und
d) Agar-Agar in einer Menge zwischen 1 und 12 Gewichts-%, bezogen auf die gesamte Zubereitung;
wobei die fetthaltige Zubereitung weder Fette mit einem Gehalt an gesättigten Fettsäuren pflanzlichen Ursprungs von mehr als 25 Gewichts-%, noch Fette mit einem Gehalt an gesättigten Fettsäuren tierischen Ursprungs von mehr als 15 Gewichts-%, noch Transfette, noch vollständig oder teilweise hydrierte Öle oder Fette, noch umgeesterte Fette umfasst;
vorausgesetzt, dass die Menge aller Komponenten in der finalen Zubereitung 100 % nicht überschreitet.

10. Feste fetthaltige Zubereitung nach Anspruch 9, die ferner mindestens eines umfasst aus: Zitronensäure oder Milchsäure oder Essigsäure oder eine Mischung davon, Zellulose, Pektin, Xanthan, Guarkernmehl, Gummi Arabicum, Schrot, Stärke, Salz, Carrageen, Sojalecithin, Sonnenblumenlecithin, Antioxidationsmittel, beta-Carotin, Farbstoff, Konservierungsmittel und Aromastoff.

11. Feste fetthaltige Zubereitung nach Anspruch 9 oder 10, wobei die folgenden Komponenten unabhängig voneinander in der finalen Zusammensetzung in den folgenden Bereichen (Gew.-%) vorhanden sind:
b) Wasser in einer Menge zwischen 40 und 50 Gewichts-%, bezogen auf die gesamte Zubereitung;
c) Johannisbrot in einer Menge zwischen 1 und 5 Gewichts-%, bezogen auf die gesamte Zubereitung;
d) Agar-Agar in einer Menge zwischen 1 und 5 Gewichts-%, bezogen auf die gesamte Zubereitung;
vorausgesetzt, dass die Menge aller Komponenten in der finalen Zubereitung 100 % nicht überschreitet.

12. Feste fetthaltige Zubereitung nach Anspruch 11, wobei die folgenden Komponenten unabhängig voneinander in der finalen Zusammensetzung in den folgenden Bereichen (Gew.-%) vorhanden sind:
a) ein Öl ausgewählt aus der Gruppe bestehend aus ölsäurereichem Sonnenblumenöl, Olivenöl, Natives Olivenöl Extra, Sonnenblumenkernöl, Rapsöl, Traubenkernöl oder jedem anderen pflanzlichen Öl, welches bei Raumtemperatur flüssig ist, das weniger als 25 Gewichts-% gesättigte Fette enthält, in einer Menge zwischen 40 und 50 Gewichts-%, bezogen auf die gesamte Zubereitung;
b) Wasser in einer Menge zwischen 45 und 50 Gewichts-%, bezogen auf die gesamte Zubereitung;
c) Johannisbrot in einer Menge zwischen 1 und 2 Gewichts-%, bezogen auf die gesamte Zubereitung;
d) Agar-Agar in einer Menge zwischen 1 und 2 Gewichts-%, bezogen auf die gesamte Zubereitung;
vorausgesetzt, dass die Menge aller Komponenten in der finalen Zubereitung n 100 % nicht überschreitet.

13. Feste fetthaltige Zubereitung nach einem der Ansprüche 9 bis 12, wobei die folgenden Komponenten unabhängig voneinander in der finalen Zusammensetzung in den folgenden Bereichen (Gew.-%) vorhanden sind:
a) Zitronensäure oder Milchsäure oder Essigsäure oder eine Mischung davon in einem Bereich zwischen 1 und 50 %, bevorzugt zwischen 1 und 25 % und mehr bevorzugt zwischen 1 - 12 %;
b) Zellulose in einem Bereich zwischen 1 und 40 %; bevorzugt zwischen 1 und 20 %, und mehr bevorzugt zwischen 1 - 10 %;
c) Pektin in einem Bereich zwischen 0,1 und 4 %; bevorzugt zwischen 0,1 und 2 %, und mehr bevorzugt zwischen 0,1 - 1 %;
d) Xanthan in einem Bereich zwischen 0,1 und 3 %, bevorzugt zwischen 0,1 und 2 %, und mehr bevorzugt zwischen 0,1 - 1,6 %;
vorausgesetzt, dass die Menge aller Komponenten in der finalen Zubereitung 100 % nicht überschreitet.

14. Verwendung der festen fetthaltigen Zubereitung nach einem der Ansprüche 9 bis 13 als Ersatzkomponente für Fett oder Inhaltsstoffe tierischen Ursprungs, um in ein Fleisch- oder Käseprodukt oder in ein Produkt zur Fütterung von Tieren eingearbeitet zu werden.

## Revendications

1. Procédé de fabrication d'une préparation grasse solide à incorporer dans un produit à base de viande ou de fromage ou dans un produit servant à nourrir les animaux en tant que composant de substitution de matières grasses ou d'ingrédients d'origine animale, dans lequel ladite préparation grasse ne comprend pas de matières grasses ayant une teneur en matière grasse saturée d'origine végétale supérieure à 25 % en poids, ni de matières grasses ayant une teneur en matière grasse saturée d'origine animale supérieure à 15 % en poids, ni de matières grasses trans, ni d'huiles ou de matières grasses totalement ou partiellement hydrogénées, ni de matières grasses interestérifiées, comprenant les étapes de :
a) pesage et mélange d'ingrédients solides ou de dilution comprenant :
- du caroube en une quantité comprise entre 1 et 12 % en poids par rapport à la préparation totale, et
- de la gélose ou à la fois du carraghénane et de la gélose en une quantité comprise entre 1 et 12 % en poids par rapport à la préparation totale ;
b) chauffage d'eau en une quantité comprise entre 1 et 50 % en poids par rapport à la préparation totale à au moins 60 °C dans un mélangeur de type hacheur, de préférence à au moins 85 °C ;
c) ajout des ingrédients de l'étape a) dans le mélangeur de type hacheur chauffé de l'étape b) jusqu'à obtention d'une solution homogène ;
d) ajout d'une huile en une quantité comprise entre 1 et 50 % en poids par rapport à la préparation totale choisie dans le groupe consistant en l'huile de tournesol à forte teneur oléique, l'huile d'olive, l'huile d'olive vierge extra, l'huile de graines de tournesol, l'huile de colza, l'huile de pépins de raisin ou toute autre huile végétale liquide à température ambiante contenant moins de 25 % en poids de matières grasses saturées, jusqu'à obtention d'une émulsion sans observer d'huile,
étant entendu que la quantité des composants ajoutés aux étapes a) à d) ne dépasse pas 100 %.

2. Procédé selon la revendication 1, comprenant en outre l'étape de :
e) conditionnement de l'émulsion obtenue à l'étape d), et éventuellement
f) introduction de ladite émulsion conditionnée dans un réfrigérateur ou son stockage à température ambiante.

3. Procédé selon la revendication 1 ou 2, dans lequel les ingrédients de l'étape a) comprennent en outre au moins l'un de : la cellulose, la pectine, le xanthane, la gomme de guar, la gomme arabique, la farine, l'amidon, le sel, le carraghénane, la lécithine de soja, la lécithine de tournesol, un antioxydant, le bêta-carotène, un colorant, un conservateur et un arôme.

4. Procédé selon l'une quelconque des revendications 1 à 3, dans lequel les ingrédients solides ou de dilution sont présents en une quantité comprise entre 1 et 5 % en poids par rapport à la préparation totale, de préférence entre 1 et 2 % en poids par rapport à la préparation totale.

5. Procédé selon l'une quelconque des revendications précédentes, dans lequel l'eau est présente en une quantité comprise entre 40 et 50 % en poids par rapport à la préparation totale, de préférence entre 45 et 50 % en poids par rapport à la préparation totale.

6. Procédé selon l'une quelconque des revendications précédentes, dans lequel l'étape c) et l'étape d) sont réalisées indépendamment l'une de l'autre à une vitesse comprise entre 40 et 25 000 tr/min.

7. Procédé selon l'une quelconque des revendications précédentes, dans lequel une solution aqueuse d'acide citrique anhydre ou d'acide citrique solide ou d'acide lactique ou d'acide acétique ou d'un de leurs mélanges est ajoutée à l'étape c).

8. Procédé selon l'une quelconque des revendications précédentes, dans lequel l'huile ajoutée à l'étape d) est présente en une quantité comprise entre 30 et 50 % en poids par rapport à la préparation totale, de préférence entre 40 et 50 % en poids par rapport à la préparation totale.

9. Préparation grasse solide comprenant ou consistant en les composants suivants :
a) une huile en une quantité comprise entre 30 et 50 % en poids par rapport à la préparation totale, choisie dans le groupe consistant en l'huile de tournesol à haute teneur oléique, l'huile d'olive, l'huile d'olive vierge extra, l'huile de tournesol, l'huile de colza, l'huile de pépins de raisin ou toute autre huile végétale liquide à température ambiante contenant moins de 25 % en poids de matières grasses saturées ;
b) de l'eau en une quantité comprise entre 1 et 50 % en poids par rapport à la préparation totale ;
c) du caroube en une quantité comprise entre 1 et 12 % en poids par rapport à la préparation totale ; et
d) de la gélose en une quantité comprise entre 1 et 12 % en poids par rapport à la préparation totale ;
ladite préparation grasse ne comprenant pas de matières grasses ayant une teneur en matière grasse saturée d'origine végétale supérieure à 25 % en poids, ni de matières grasses ayant une teneur en matière grasse saturée d'origine animale supérieure à 15 % en poids, ni de matières grasses trans, ni d'huiles ou de matières grasses totalement ou partiellement hydrogénées ; ni de matières grasses interestérifiées ;
étant entendu que la quantité de tous les composants dans la préparation finale ne dépasse pas 100 %.

10. Préparation grasse solide selon la revendication 9, comprenant en outre au moins l'un de : l'acide citrique ou l'acide lactique ou l'acide acétique ou un de leurs mélanges, la cellulose, la pectine, le xanthane, la gomme de guar, la gomme arabique, la farine, l'amidon, le sel, le carraghénane, la lécithine de soja, la lécithine de tournesol, un antioxydant, le bêta-carotène, un colorant, un conservateur et un arôme.

11. Préparation grasse solide selon la revendication 9 ou 10, dans laquelle les composants suivants sont présents indépendamment dans la composition finale dans les plages suivantes (% en poids) :
b) de l'eau en une quantité comprise entre 40 et 50 % en poids par rapport à la préparation totale
c) du caroube en une quantité comprise entre 1 et 5 % en poids par rapport à la préparation totale ;
d) de la gélose en une quantité comprise entre 1 et 5 % en poids par rapport à la préparation totale ;
étant entendu que la quantité de tous les composants dans la préparation finale ne dépasse pas 100 %.

12. Préparation grasse solide selon la revendication 11, dans laquelle les composants suivants sont présents indépendamment dans la composition finale dans les plages suivantes (% en poids) :
a) une huile choisie dans le groupe consistant en l'huile de tournesol à haute teneur oléique, l'huile d'olive, l'huile d'olive vierge extra, l'huile de tournesol, l'huile de colza, l'huile de pépins de raisin ou toute autre huile végétale liquide à température ambiante contenant moins de 25 % en poids de matières grasses saturées en une quantité comprise entre 40 et 50 % en poids par rapport à la préparation totale
b) de l'eau en une quantité comprise entre 45 et 50 % en poids par rapport à la préparation totale
c) du caroube en une quantité comprise entre 1 et 2 % en poids par rapport à la préparation totale ;
d) de la gélose en une quantité comprise entre 1 et 2 % en poids par rapport à la préparation totale ;
étant entendu que la quantité de tous les composants dans la préparation finale ne dépasse pas 100 %.

13. Préparation grasse solide selon l'une quelconque des revendications 9 à 12, dans laquelle les composants suivants sont présents indépendamment dans la composition finale dans les plages suivantes (% en poids) :
a) l'acide citrique ou l'acide lactique ou l'acide acétique ou un de leurs mélanges dans une plage comprise entre 1 et 50 %, de préférence entre 1 et 25 % et mieux encore entre 1 et 12 % ;
b) la cellulose dans une plage comprise entre 1 et 40 % ; de préférence entre 1 et 20 % et mieux encore entre 1 et 10 % ;
c) la pectine dans une plage comprise entre 0,1 et 4 % ; de préférence entre 0,1 et 2 % et mieux encore entre 0,1 et 1 % ;
d) le xanthane dans une plage comprise entre 0,1 et 3 %, de préférence entre 0,1 et 2 % et mieux encore entre 0,1 et 1,6 % ;
étant entendu que la quantité de tous les composants dans la préparation finale ne dépasse pas 100 %.

14. Utilisation de la préparation grasse solide selon l'une quelconque des revendications 9 à 13, comme composant de substitution pour des matières grasses ou des ingrédients d'origine animale à incorporer dans un produit à base de viande ou de fromage ou dans un produit servant à nourrir les animaux.
